# EUROPEAN PATENT APPLICATION

(11) **EP 2 408 195 A1**
(43) Date of publication of application: **18.01.2012**
(21) Application number: 11154130.6
(22) Date of filing: 11.02.2011
(51) Int. Cl.: H04N 5/44, H04N 5/455, H04N 5/46

(54) **Signal Receiving Apparatus and Signal Processing Method of the Same**

(30) Priority: 15.07.2010 KR 20100068532
(71) Applicant: SAMSUNG ELECTRONICS CO., LTD., Suwon-si, Gyeonggi-do (KR)
(72) Inventor: Choi, Young-ho, Gyeonggi-do (KR)
(74) Representative: Hewett, Jonathan Michael Richard

(57) **Abstract**

A signal receiving apparatus and a signal processing method are provided. The signal receiving apparatus includes: a plurality of signal receiving units which receive analog signals; a plurality of radio frequency (RF) processing units which receive the analog signals from the plurality of signal receiving units and change frequencies of the received analog signals into intermediate frequencies; a plurality of analog-to digital (AD) converters which convert the analog signals having the intermediate frequencies into digital signals; a demodulating unit which demodulates the digital signals; a switching unit which is interposed between the plurality of AD converters and the demodulating unit; and a control unit which controls the switching unit to connect one of the plurality of AD converters to the demodulating unit based on a select signal to select one of the plurality of signal receiving units.

## Description

The present invention relates to a signal receiving apparatus and a signal processing method of the same, and more particularly, to a signal processing apparatus which receives analog image signals, and a signal processing method of the same.

A display apparatus is implemented by a television (TV) or a computer monitor. The display apparatus processes image signals received from an external source according to various kinds of image processing and displays images on a panel forming a display region based on the processed image signals. In recent years, image signal processing performed by the display apparatus has been mainly digitalized. If a received image signal is an analog signal, such as a radio frequency (RF) signal, the image signal is converted into a digital signal for further processing.

An RF signal may be received in the display apparatus via an antenna over the air or via a cable. The recent use of a display apparatus including a plurality of receivers receiving RF signals has encountered problems including inter-RF signal interference and signal loss. Decreased inter-RF signal interference for improvement of signal characteristics results in increased signal loss, while decreased signal loss results in increased inter-RF signal interference. That is, there is a trade-off between the two factors. Therefore, there is a challenge to simultaneously improve the two factors. Further, additional circuits for improvement of signal characteristics may result in increase in production costs of display apparatuses. Accordingly, minimizing cost is also a challenge while simultaneously improving the two factors.

One or more exemplary embodiments of the present invention provide a signal receiving apparatus with improved inter-signal interference and signal loss, and a signal processing method of the same.

One or more exemplary embodiments also provide a signal receiving apparatus which reduces time taken for channel automatic search, and a signal processing method of the same.

One or more exemplary embodiments also provide a signal receiving apparatus which reduces time taken for channel switching, and a signal processing method of the same.

According to an aspect of the present invention there is provided a signal receiving apparatus including: a plurality of signal receiving units which receive respective analog signals; a plurality of radio frequency (RF) processing units which change frequencies of the received analog signals into respective intermediate frequencies; a plurality of analog-to-digital (AD) converters which convert the analog signals having the respective intermediate frequencies into digital signals; a demodulating unit which demodulates the digital signals; a switching unit which is interposed between the plurality of AD converters and the demodulating unit; and a control unit which controls the switching unit to connect one of the plurality of AD converters to the demodulating unit based on a select signal to select one of the plurality of signal receiving units.

The plurality of signal receiving units may include at least two of a terrestrial receiving unit which receives a terrestrial broadcasting signal, a cable receiving unit which receives a cable broadcasting signal, and a satellite receiving unit which receives a broadcasting signal via a satellite.

Frequencies of the plurality of analog signals received by the plurality of signal receiving units may be changed into intermediate frequencies by different RF processing units.

The analog signals having the respective intermediate frequencies may be converted into digital signals by different AD converters.

Upon receiving a control signal for a channel automatic search, the control unit may control the plurality of RF processing units and the plurality of AD converters to simultaneously process the plurality of analog signals received from the plurality of signal receiving units and control the switching unit such that the plurality of digital signals are sequentially demodulated in the demodulating unit.

The signal receiving apparatus may further include a display unit which displays the demodulated digital signals and the signal receiving apparatus may be implemented by a TV.

The plurality of AD converters, the switching unit and the demodulating unit may be integrated into a single chip.

According to another aspect of the present invention there is provided a signal processing method of a signal receiving apparatus including a plurality of signal receiving units which receive respective analog signals, a plurality of RF processing units which change frequencies of the received analog signals into respective intermediate frequencies, a plurality of AD converters which convert the analog signals having the respective intermediate frequencies into digital signals, and a demodulating unit which demodulates the digital signals, the method including: receiving a select signal to select one of the plurality of signal receiving units; connecting one of the plurality of AD converters, which corresponds to the selected signal receiving unit, to the demodulating unit; changing a frequency of the analog signal received by the selected signal receiving unit into an intermediate frequency in one of the plurality of RF processing units which corresponds to the selected signal receiving unit; converting the analog signal having the intermediate frequency into a digital signal in one of the plurality of AD converters which corresponds to the selected signal receiving unit; and demodulating the digital signal.

The signal processing method may further include: receiving a control signal for a channel automatic search; changing the frequencies of the plurality of analog signals received from the plurality of signal receiving units into the respective intermediate frequencies; converting the analog signals having the respective intermediate frequencies into a plurality of respective digital signals; and demodulating the plurality of respective digital signals sequentially.

The above and/or other aspects will become apparent and more readily appreciated from the following description of exemplary embodiments, taken in conjunction with the accompanying drawings, in which:
FIG. 1 is a control block diagram of a signal receiving apparatus according to an exemplary embodiment;
FIGs. 2 and 3 are control block diagrams of a signal receiving apparatus according to another exemplary embodiment;
FIG. 4 is a flow chart for explaining a signal processing method of the signal receiving apparatus shown in FIGs. 2 and 3;
FIG. 5 is a control block diagram for explaining channel automatic search of a signal receiving apparatus according to an exemplary embodiment;
FIG. 6 is a flow chart for explaining channel automatic search of the signal receiving apparatus shown in FIG. 5; and
FIG. 7 is a control block diagram of a signal receiving apparatus according to still another exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

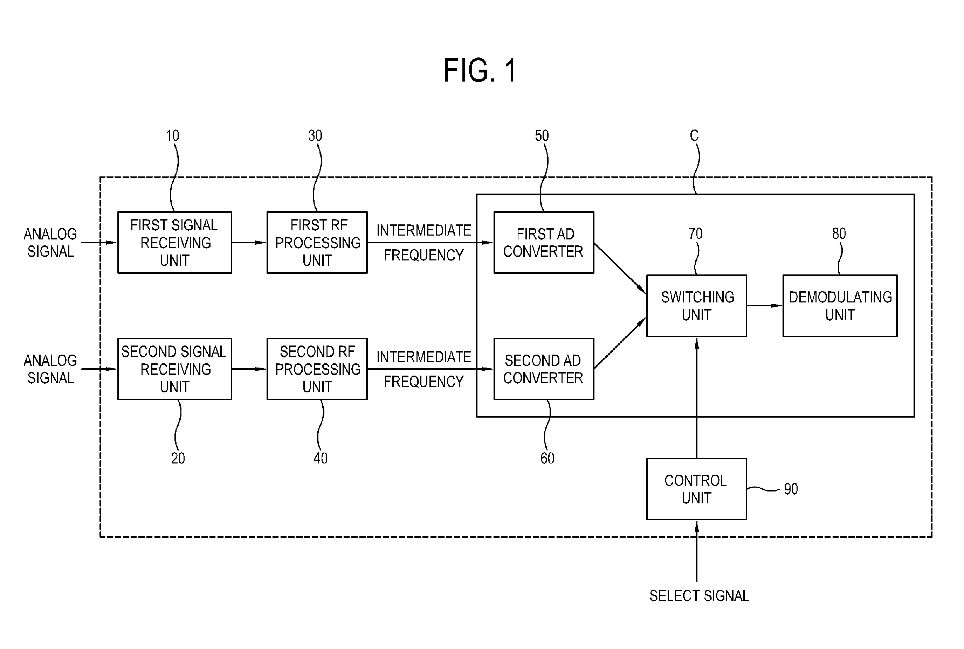

FIG. 1 is a control block diagram of a signal receiving apparatus according to an exemplary embodiment.

Referring to FIG. 1, a signal receiving apparatus includes a plurality of signal receiving units 10 and 20, a plurality of corresponding RF processing units 30 and 40 connected to the signal receiving units 10 and 20, a plurality of corresponding AD converters 50 and 60 connected to the RF processing units 30 and 40, a demodulating unit 80, a switching unit 70 connected between the AD converters 50 and 60 and the demodulating unit 80, and a control unit 90 which controls the entire operation of the apparatus. In this exemplary embodiment, the signal receiving apparatus may be implemented by a tuner module which receives high frequency analog signals or a set-top box including the tuner module.

Frequencies of analog signals received by the first signal receiving unit 10 and the second signal receiving unit 20 may be either different or overlapped in a certain band. If the received analog signals are overlapped, it is important for signal reception to prevent inter-analog signal interference. The first signal receiving unit 10 and the second signal receiving unit 20 each may an antenna or a connector to allow for signal reception.

The plurality of RF processing units 30 and 40 are respectively connected to the plurality of signal receiving units 10 and 20. A frequency of an analog signal received by the first signal receiving unit 10 is processed by the first RF processing unit 30, and a frequency of an analog signal received by the second signal receiving unit 20 is processed by the second RF processing unit 40. The RF processing units 30 and 40 change frequencies of RF analog signals into intermediate frequencies (IF) which lie between a radio band frequency and a baseband frequency. Such a change of RF into IF may allow increased selectivity with which only a signal having a desired frequency can be filtered and reduce the effect by noise or peripheral circuits. The RF processing units 30 and 40 each may include a tunable filter and an oscillator.

Although the first and second signal receiving units 10 and 20 and the first and second RF processing units 30 and 40 are separately shown and described in this exemplary embodiment, they may be integrated in practical use without being limited thereto. For example, the first and second signal receiving units 10 and 20 and the first and second RF processing units 30 and 40 may be designed into a single chip.

The plurality of AD converters 50 and 60 is respectively connected to the plurality of RF processing units 30 and 40. Specifically, the analog signal received by the first signal receiving unit 10 is input to the first AD converter 50 via the first RF processing unit 30, and the analog signal received by the second signal receiving unit 20 is input to the second AD converter 60 via the second RF processing unit 40. These AD converters 50 and 60 each convert the analog signal having the intermediate frequency into digital signals to be sampled, and change the frequencies of the received signals into baseband frequencies.

The analog signals received by the first and second signal receiving units 10 and 20 undergo their respective separate processes until they are processed by the first and second AD converters 50 and 60. Since the analog signals have no overlapping processing route or undergo no switching procedure to change a processing route until they are converted into digital signals, the analog signals received in the signal receiving apparatus can remain isolated without any interference therebetween.

The switching unit 70 is connected between the plurality of AD converters 50 and 60 and the demodulating unit 80. Depending on how the switching unit 70 is connected, a digital signal output from one of the plurality of AD converters 50 and 60 is input to the demodulating unit 80.

The demodulating unit 80 demodulates the input digital signal to restore it to the original analog signal. The signal modulated by the demodulating unit 80 may be output as a voice signal or displayed as an image signal. For this processing, the signal may be input to a different image processing block (not shown) or output to an external signal processing apparatus (not shown).

The plurality of AD converters 50 and 60, the switching unit 70 and the demodulating unit 80 may be integrated into a single chip (C). However, it should be understood that these components may be arranged with a physically separate configuration or merged into the RF processing units 30 and 40.

The control unit 90 controls the switching unit 70 to connect one of the plurality of AD converters 50 and 60 to the demodulating unit 80 based on a select signal to select one of the plurality of signal receiving units 10 and 20. Since only one of a plurality of signals to be output to the demodulating unit 80 by means of the switching unit 70 is selected, an analog signal received by one of the signal receiving units 10 and 20 is less likely to interfere with an analog signal received by the other signal receiving unit or to be lost on the way.

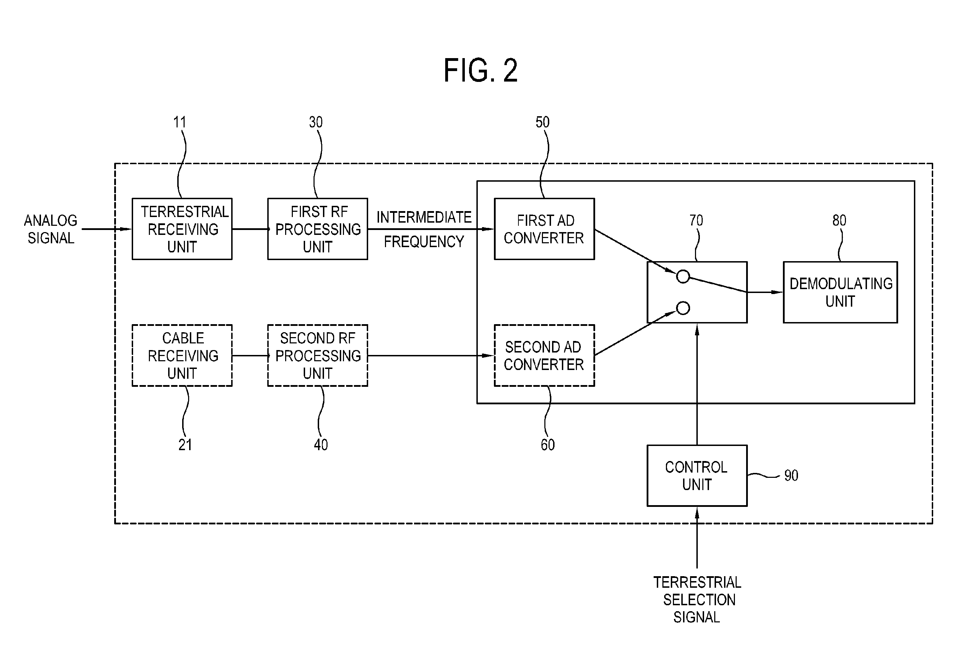

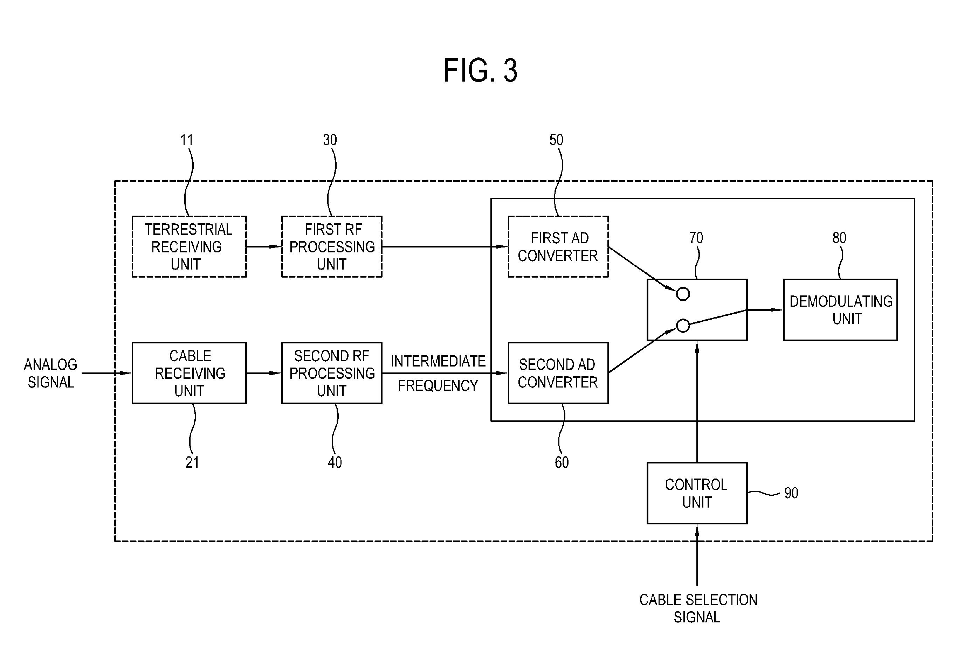

FIGs. 2 and 3 are control block diagrams of a signal receiving apparatus according to another exemplary embodiment. Referring to FIGS. 2 and 3, a signal receiving apparatus includes signal receiving units as a terrestrial receiving unit 11 and a cable receiving unit 21. An analog signal received by the signal receiving apparatus includes a broadcasting signal broadcast from a broadcasting station. The terrestrial receiving unit 11 may include an antenna which receives terrestrial broadcasting signals, and the cable receiving unit 21 may include a connector to which a cable is connected to provide broadcasting signals.

Since a frequency band of a broadcasting signal received by a terrestrial receiving unit overlaps with that of a broadcasting signal received by a cable receiving unit, the broadcasting signal at the cable receiving unit is interrupted if the broadcasting signal is received by the terrestrial receiving unit, or the broadcasting signal at the terrestrial receiving unit is interrupted if the broadcasting signal is received by the cable receiving unit. In the past, although a switching element was connected between a single RF processing unit and a signal receiving unit to maintain such isolation, complete signal interruption could not be achieved due to high frequency characteristics. In addition, an amplifier such as low noise amplifier (LNA) had to be provided to compensate for signal loss which may be caused by connection of the switching element, which results in increased production costs of the apparatus and delay of channel switching.

In this exemplary embodiment, if a user selects a broadcasting signal received by the terrestrial receiving unit 11, the control unit 90 controls the switching unit 70 to connect the first AD converter 50 to the demodulating unit 80. The broadcasting signal received by the terrestrial receiving unit 11 does not pass through the switching unit or an amplifier until it is converted into a digital signal in the first AD converter 50. Thus, the broadcasting signal received by the terrestrial receiving unit 11 is less likely to leak into a stage of the cable receiving unit 21, thereby increasing signal isolation. In particular, if an amplifier is included in the signal receiving apparatus, a level of signal amplification is regulated depending on intensity of the broadcasting signal, which requires a time of 100∼300 ms to determine the intensity of the broadcasting signal and results in a delay of channel switching. This exemplary embodiment does not require such an amplifier in the signal receiving apparatus, which results in fast channel switching and prevention of signal loss due to an additional circuit. Furthermore, the plurality of RF processing units 30 and 40 and the plurality of AD converters 50 and 60 may simultaneously process a plurality of signals received from the plurality of signal receiving units, thereby improving a tuning speed when tuning to different inputs via the switching unit 70.

FIG. 3 is a control block diagram of the signal receiving apparatus where a user selects the broadcasting signal received by the cable receiving unit 12. Referring to FIG. 3, the switching unit 70 connects the second AD converter 60 and the demodulating unit 80. The broadcasting signal received by the cable receiving unit 21 is changed into a signal having an intermediate frequency in the second RF processing unit 40, which is then converted into a digital signal in the second AD converter 60. The broadcasting signal received by the cable receiving unit 21 can maintain isolation without leaking into a stage of the terrestrial receiving unit 11 and have little signal loss.

As an alternative exemplary embodiment, the signal receiving apparatus may include a satellite receiving unit which receives broadcasting signal via a satellite, or a connector which receives composite videos, component videos and the like.

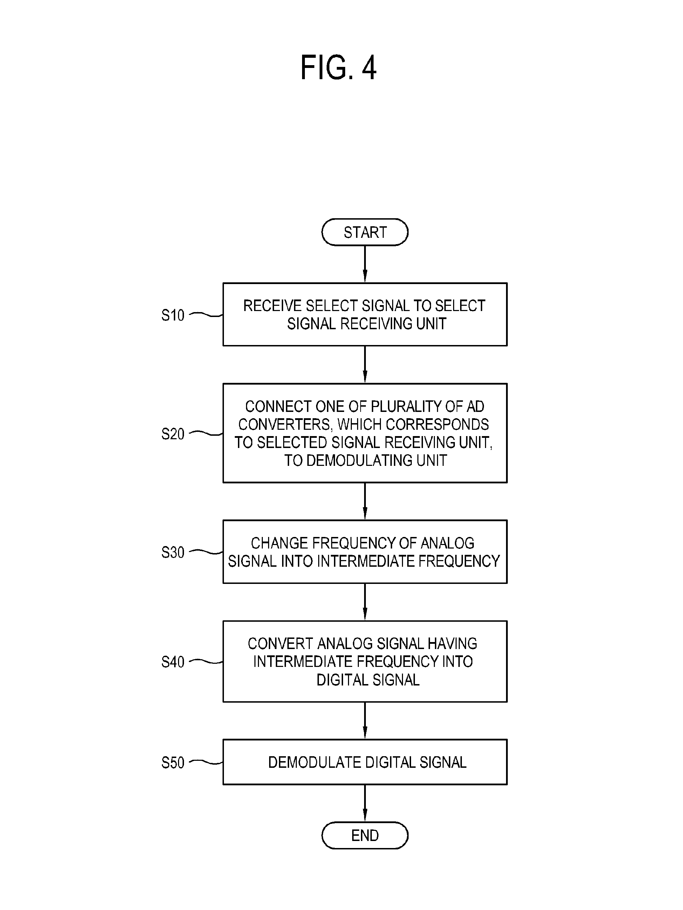

FIG. 4 is a flow chart for explaining a signal processing method of the signal receiving apparatus shown in FIGs. 2 and 3. With reference to this flow chart, a method of selecting and processing a signal according to this exemplary embodiment will be described below. Although certain steps may be shown in a specific order, it would be understood that the ordering of steps may be modified without departing from the scope of the exemplary method.

First, the signal receiving apparatus receives a select signal to select one of two signal receiving units, i.e., the terrestrial receiving unit 11 and the cable receiving unit 21 (S10).

The control unit 90 connects one of the plurality of AD converters 50 and 60, which corresponds to the selected signal receiving unit, to the demodulating unit 80 (S20).

Next, under control of the control unit 90, one of the RF processing units 30 and 40 corresponding to the selected signal receiving unit changes the frequency of the analog signal received by the selected signal receiving unit into an intermediate frequency (S30).

Thereafter, the connected AD converter 50 or 60 which corresponds to the selected signal receiving unit, i.e., is connected to the corresponding RF processing unit 30 or 40 which changed the frequency of the analog signal into the intermediate frequency, converts the analog signal having the intermediate frequency into a digital signal (S40).

Finally, the demodulating unit 80 demodulates the input digital signal (S50).

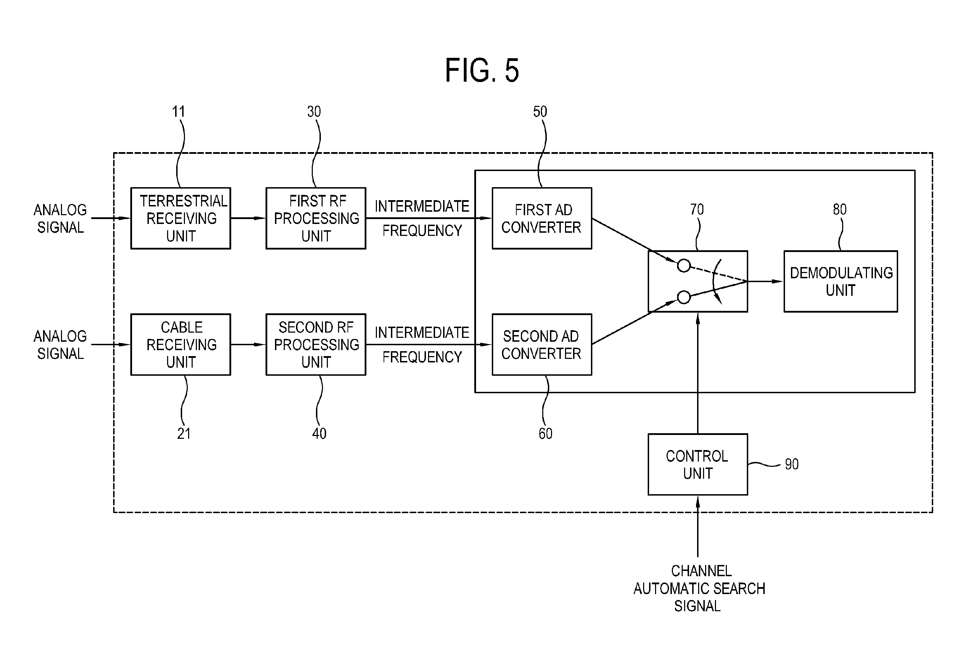

FIG. 5 is a control block diagram for explaining a channel automatic search of a signal receiving apparatus according to an exemplary embodiment. The recent rapid increase in the number of broadcasting channels requires much time to perform a channel automatic search for all received broadcasting channels. In particular, the number of channels for cable broadcasting reaches several hundreds, requiring even more time taken for a channel automatic search.

Upon receiving a control signal for a channel automatic search, the control unit 90 controls the plurality of RF processing units 30 and 40 and the plurality of AD converters 50 and 60 to simultaneously process a plurality of analog signals received from the plurality of signal receiving units, i.e., the terrestrial receiving unit 11 and the cable receiving unit 21.

In the past, terrestrial broadcasting signals and cable broadcasting signals were sequentially tuned by a single RF processing unit, requiring much time taken for channel search. However, according to this exemplary embodiment, the analog signals received from the terrestrial receiving unit 11 and the cable receiving unit 21 are processed by the respective RF processing units 30 and 40 simultaneously, thereby improving a tuning speed. Further, unlike the convention techniques, the signal receiving apparatus of the exemplary embodiment includes no amplifier, which results in increase of a tuning speed.

The control unit 90 controls the switching unit 70 such that a plurality of digital signals processed by the plurality of AD converters 50 and 60 is sequentially demodulated by the demodulating unit 80. When the broadcasting signal received by the terrestrial receiving unit 11 is changed in frequency faster than the broadcasting signal received by the cable receiving unit 21 and is converted into the digital signal, the control unit 90 connects the first AD converter 50 to the demodulating unit 80 for demodulation of the digital signal. While the broadcasting signal received by the terrestrial receiving unit 11 is being demodulated, the broadcasting signal received by the cable receiving unit 21 undergoes a similar process in the second RF processing unit 40 and the second AD converter 60. Upon completion of the demodulation of the broadcasting signal received by the terrestrial receiving unit 11, the control unit 90 controls the switching unit 70 to connect the second AD converter 60 to the demodulating unit 80.

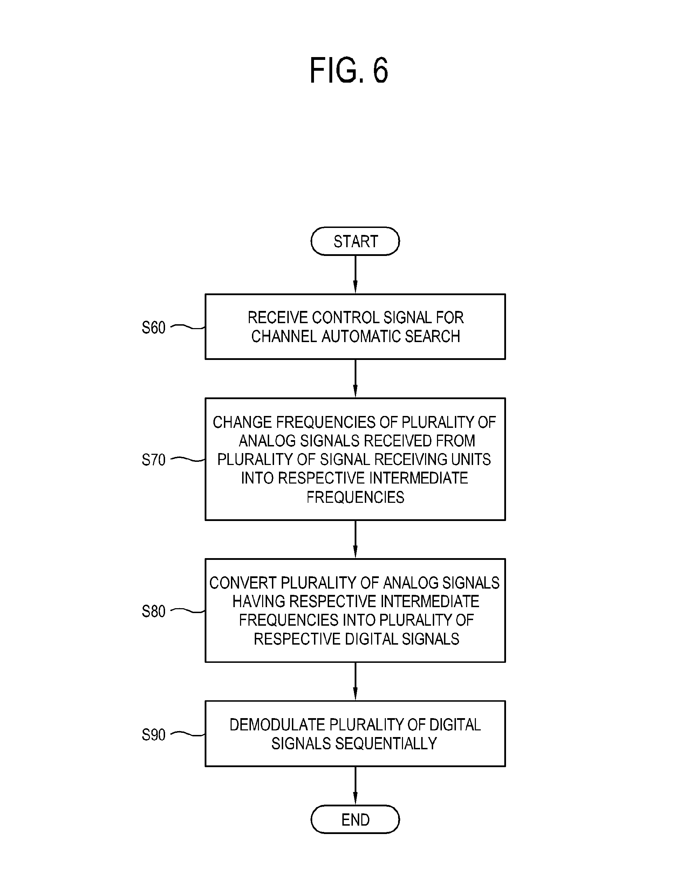

FIG. 6 is a flow chart for explaining a channel automatic search of the signal receiving apparatus shown in FIG. 5. A channel automatic searching method according to this exemplary embodiment will be described below with reference to FIGS. 5 and 6.

First, upon receiving a control signal for channel automatic search (S60), the control unit 90 controls the first and second RF processing units 30 and 40 to change frequencies of a plurality of analog signals received from the plurality of signal receiving units 10 and 20 into respective intermediate frequencies (S70).

The plurality of analog signals having the intermediate frequencies are converted into respective digital signals by the first and second AD converters 50 and 60 (S80).

An earlier tuned one of the broadcasting signal received by the terrestrial receiving unit 11 and the broadcasting signal received by the cable receiving unit 21 is input to and demodulated by the demodulating unit 80, and the other is sequentially demodulated (S90). That is, the control unit 90 detects which signal is tuned first, and selects that signal to be input to the demodulating unit 80 first.

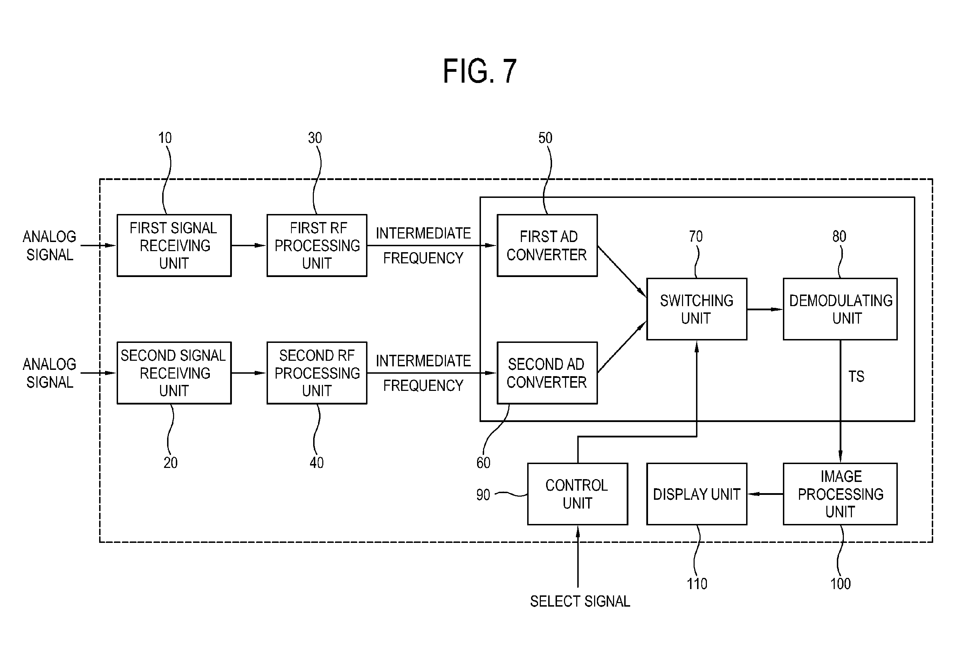

FIG. 7 is a control block diagram of a signal receiving apparatus according to still another exemplary embodiment.

Referring to FIG. 7, a signal receiving apparatus according to this exemplary embodiment may be implemented by an image processing apparatus including an image processing unit 100 and a display unit 110. The signal receiving apparatus may be also implemented by a television which displays broadcasting signals. In addition, for example, general inventive concept may be also applied to an imaging system connected to a computer monitor which receives an analog image signal from a computer and displays it as an image.

The image processing unit 100 may perform image processes such as decoding, de-interlacing, frame refresh rate transformation, scaling, detail enhancement, line scanning, etc. for a demodulated digital signal in accordance of image and voice formats.

The display unit 110 may be implemented by a liquid crystal display (LCD), a plasma display panel (PDP), or any other displays known in the art which display an image signal processed by the image processing unit 100 as an image. If the display unit 110 is implemented by the LCD, an image frame or an image field is displayed on a display area of the display unit 110 as a plurality of horizontal scan lines scanned by the image processing unit 100 is vertically arranged.

As an alternative exemplary embodiment, the signal receiving apparatus may further include a user selection unit (not shown) to select one of the signal receiving units 10 and 20. The user selection unit is operated by a user to deliver a select signal for selection of one of the signal receiving units 10 and 20 or a control signal for channel automatic search to the control unit 90. The user selection unit may be implemented in various ways and may include menu keys provided in the outside of the signal receiving apparatus or a remote controller which communicates with the signal receiving apparatus.

The signal receiving apparatus according to the above-described exemplary embodiments are characterized by the elimination of switch elements provided adjacent to the RF processing units (e.g., between a RF processing unit and a signal receiving unit) in the signal receiving apparatus having two or more RF signal receiving units and inclusion of RF processing units and AD converters of numbers corresponding to the number of RF signal receiving units, which results in increase of signal isolation and prevention of signal loss.

Although a few exemplary embodiments have been shown and described, it will be appreciated by those skilled in the art that changes may be made in these exemplary embodiments without departing from the principles of the present invention, the scope of which is defined in the appended claims.

## Claims

1. A signal processing method of a signal receiving apparatus including a plurality of signal receiving units which receive analog signals, a plurality of radio frequency (RF) processing units which receive the analog signals from the plurality of signal receiving units and change frequencies of the analog signals into intermediate frequencies, a plurality of analog-to-digital (AD) converters which receive the analog signals having the intermediate frequencies from the plurality of RF processing units and convert the analog signals having the respective intermediate frequencies into digital signals, and a demodulating unit which demodulates the digital signals and generates demodulated digital signals, the method comprising:
receiving a signal to select one of the plurality of signal receiving units;
connecting one of the plurality of AD converters, which corresponds to the selected signal receiving unit of the plurality of signal receiving units, to the demodulating unit;
changing a frequency of an analog signal of the analog signals received by the selected signal receiving unit into one of the intermediate frequencies by one of the plurality of RF processing units which corresponds to the selected signal receiving unit;
converting the analog signal having the intermediate frequency into a digital signal in one of the plurality of AD converters which corresponds to the selected signal receiving unit; and
demodulating the digital signal.

2. The signal processing method according to claim 1, wherein the plurality of signal receiving units comprises at least two of a terrestrial receiving unit which receives a terrestrial broadcasting signal, a cable receiving unit which receives a cable broadcasting signal, and a satellite receiving unit which receives a broadcasting signal via a satellite.

3. The signal processing method according to claim 1 or claim 2, further comprising:
receiving a control signal for a channel automatic search;
changing the frequencies of the analog signals received from the plurality of signal receiving units into the intermediate frequencies;
converting the analog signals having the intermediate frequencies into digital signals; and
demodulating the digital signals sequentially.

4. A signal receiving apparatus comprising:
a plurality of signal receiving units which receive analog signals;
a plurality of analog-to-digital (AD) converters which receive the analog signals from the plurality of signal receiving units and convert the analog signals into digital signals;
a demodulating unit which demodulates the digital signals;
a switching unit which is interposed between the plurality of AD converters and the demodulating unit;
a control unit which controls the switching unit to selectively connect one of the plurality of AD converters to the demodulating unit;
a signal processing unit which processes an output signal of the switching unit; and
a display panel which displays the output signal processed by the signal processing unit.

5. The signal receiving apparatus according to claim 4, wherein the plurality of signal receiving units change frequencies of the analog signals into intermediate frequencies.

6. The signal receiving apparatus according to claim 5, wherein the plurality of signal receiving units comprise at least two of a terrestrial receiving unit which receives a terrestrial broadcasting signal, a cable receiving unit which receives a cable broadcasting signal, and a satellite receiving unit which receives a broadcasting signal via a satellite.

7. The signal receiving apparatus according to claim 5 or claim 6, wherein the analog signals having the intermediate frequencies are converted into the digital signals by different AD converters of the plurality of AD converters.

8. The signal receiving apparatus according to any one of claims 4 to 7, wherein, upon receiving a control signal for a channel automatic search, the control unit controls the plurality of signal receiving units and the plurality of AD converters to simultaneously process the analog signals and controls the switching unit such that the digital signals are sequentially demodulated in the demodulating unit.

9. The signal receiving apparatus according to any one of claims 4 to 8, wherein the plurality of AD converters, the switching unit and the demodulating unit are integrated into a single chip.

10. The signal receiving apparatus according to any one of claims 4 to 9, wherein the control unit is arranged to control the switching unit to selectively connect one of the plurality of AD converters to the demodulating unit based on a received signal to select one of the plurality of signal receiving units
